# EUROPEAN PATENT SPECIFICATION

(11) **EP 2 717 652 B1**
(45) Date of publication and mention of the grant of the patent: **19.08.2015**
(21) Application number: 13187058.6
(22) Date of filing: 02.10.2013
(51) Int. Cl.: H05B 6/68

(54) **Power control apparatus for high-frequency dielectric heating**
Leistungsregelungsvorrichtung zur dielektrischen Hochfrequenzerwärmung
Appareil de commande de puissance pour chauffage diélectrique haute fréquence

(30) Priority: 05.10.2012 JP 2012222818
(43) Date of publication of application: 09.04.2014
(73) Proprietor: Panasonic Corporation, Kadoma-shi Osaka 571-8501 (JP)
(72) Inventor: Suenaga, Haruo, Osaka, 540-6207 (JP); Moriya, Hideaki, Osaka, 540-6207 (JP); Shirokawa, Nobuo, Osaka, 540-6207 (JP); Kinoshita, Manabu, Osaka, 540-6207 (JP); Morikawa, Hisashi, Osaka, 540-6207 (JP)
(74) Representative: Schwabe - Sandmair - Marx

(56) References cited:
- EP-A1- 1 954 098
- EP-A1- 2 023 690
- US-A- 5 977 530
- US-A1- 2004 074 900

## Description

### Technical Field

The present invention relates to a high-frequency heating using a magnetron, which is a microwave generation device, such as a microwave oven and in particular, to a power control apparatus for high-frequency dielectric heating which controls an inverter power supply circuit so as to control the driving of the magnetron.

### Background Art

The conventional power supply installed in a high-frequency heating device is heavy and large, and reduction in size and weight of the conventional power supply has been desired. The reduction in size, weight, and cost of power supplies has been actively advanced in current various fields. In the field of the high-frequency heating device in which foods are cooked with microwave generated by a magnetron, reduction in size and weight of the power supply for driving the magnetron has been realized by using an inverter power supply circuit equipped with a switching device.

In particular, in a high-frequency inverter power supply circuit for which the present invention is intended, a resonance type circuit in which the arms of the bridge are configured by two switching devices (transistors) is used (for example, see Patent Literature 1).

For a single-transistor transistor inverter (controlling the width of on and off), a transistor whose collector-emitter withstand voltage is approximately 1000 V has to be used. However, by using a two-transistor bridge arm structure, the transistor has a lower collector-emitter withstand voltage of the transistors than the transistor in the single-transistor transistor inverter, and the transistors thus do not have such a high withstand voltage. Therefore, by using the bridge arm structure, the collector-emitter withstand voltage of the transistors only has to be approximately 600 V, and inexpensive transistors can be used; therefore, the bridge arm structure is advantageous for reduction in apparatus cost.

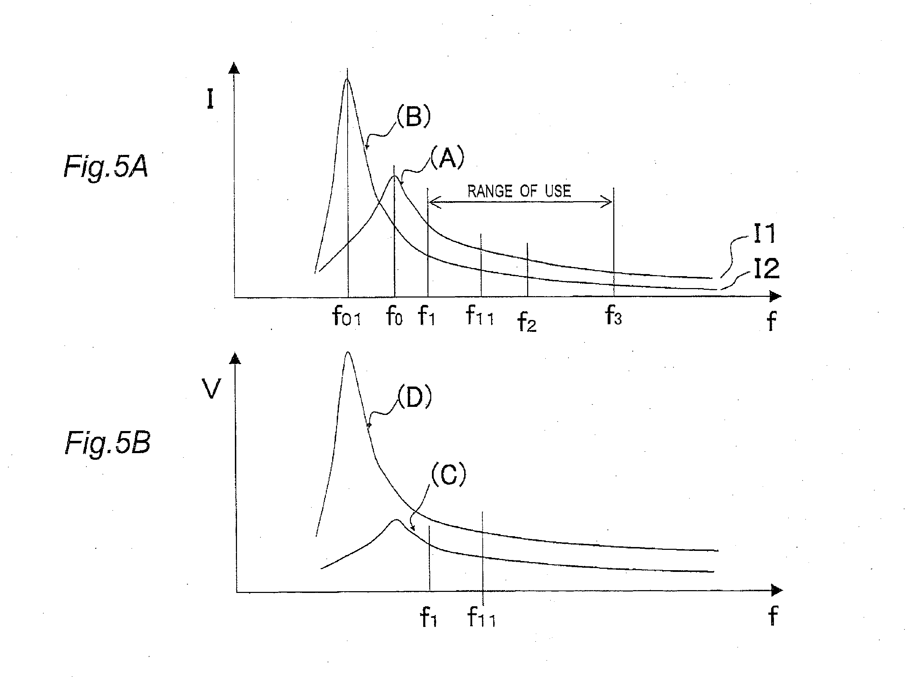

The resonance characteristics of the inverter power supply circuit of this type will then be described. Figs. 5A and 5B are waveform diagrams showing the resonance characteristics of an inverter power supply circuit of this type in which an inductance L and a capacitance C constitute a serial resonance circuit.

Fig. 5A is a diagram showing frequency-current characteristics when a constant voltage is applied to the serial resonance circuit of the inverter power supply circuit. In Fig. 5A, the horizontal axis corresponds to a switching frequency f, and the vertical axis corresponds to a current I flowing on the primary side of a leakage transformer.

Fig. 5B is a diagram showing frequency-voltage characteristics in the case shown in Fig. 5A. In Fig. 5B, the horizontal axis corresponds to the switching frequency f, and the vertical axis corresponds to a voltage generated on a secondary side of the leakage transformer.

The impedance of the serial resonance circuit becomes minimum at the resonance frequency f0, and the impedance increases as the frequency is more distant from the resonance frequency f0. Thus, as shown by the characteristic curve (A) of Fig. 5A, the current I1 is maximum at the resonance frequency f0, and the current I1 decreases as the frequency gets higher as f1, f2, and f3.

In the actual inverter operation, a predetermined frequency range f1-f3, for example, higher than the resonance frequency f0 is set to be the range of use. In addition, when the power source to be input is an alternating current such as a commercial power source, the switching frequency is varied depending on the phase of the commercial power source in conformity with the non-linear load characteristics of the magnetron as described later.

In the inverter operation, the resonance characteristics of the characteristic curve (A) shown in Fig. 5A, for example, are used to adjust the switching frequency, and in the vicinity of the phases of 90 degrees and 270 degrees, where the instantaneous voltage of the commercial power source is the highest and the boost ratio of the applied magnetron voltage to the commercial power source voltage does not have to be relatively high, the switching frequency is set to be the highest value.

For example, when the microwave oven is used with the high-frequency output of 200 W, the switching frequency is set near f3, and when used with the high-frequency output of 500 W, the switching frequency is set lower than in the case of being used with 200 W. Further, when used with the high-frequency output of 1000 W, the switching frequency is set even lower.

Naturally, since the input power or the input current is controlled, this switching frequency varies depending on the change in the voltage of the commercial power source, the magnetron temperature, and the like.

Alternatively, when the phase is near 0 degree and 180 degrees, where the instantaneous voltage of the commercial power source is the lowest, the switching frequency is lowered to the vicinity of the resonance frequency f0, hence raising, in conformity with the characteristics of the magnetron that high-frequency oscillation is caused only when a high voltage is applied, the boost ratio of the applied magnetron voltage to the commercial power source voltage so as to increase the width of the phase of the commercial power source in which the microwave can be output from the magnetron.

As described above, by varying the switching frequency of the inverter operation depending on different phases of the power source, it is possible to realize the current wave form which contains a high fundamental frequency (commercial power source frequency) component and low harmonic components.

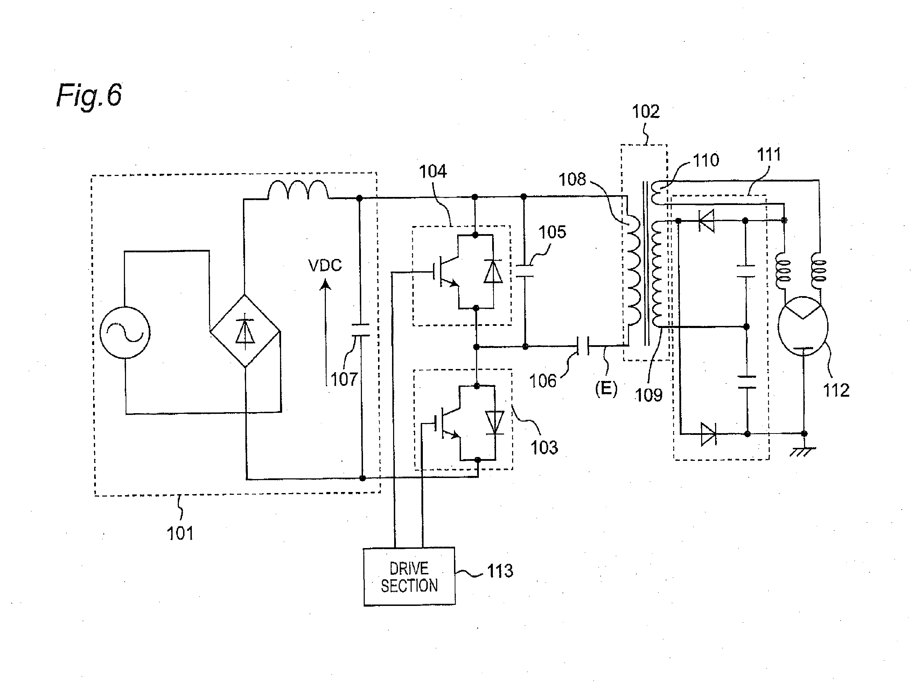

Fig. 6 shows an example of a resonance type high-frequency heating device which is described in Patent Document 1, has a two-transistor bridge arm structure, and is driven by semiconductor switching devices. In Fig. 6, the high-frequency heating device includes a DC power supply 101, a leakage transformer 102, a first semiconductor switching device 103, a second semiconductor switching device 104, a first condenser 105, a second condenser 106, a third condenser 107 (smoothing capacitor), a secondary side rectifier circuit (rectifier circuit) 111, a magnetron 112, and a drive section 113.

The DC power supply 101 full-wave rectifies the commercial power source to produce a DC voltage VDC and applies the produced DC voltage VDC to the series circuit made up of the second condenser 106 and a primary winding 108 of the leakage transformer 102 through the first semiconductor switching device 103. The first semiconductor switching device 103 and the second semiconductor switching device 104 are series-connected, and the series circuit of the primary winding 108 of the leakage transformer 102 and the second condenser 106 is parallel-connected with the second semiconductor switching device 104.

The first condenser 105 is parallel-connected with the second semiconductor switching device 104. A high voltage output generated on the secondary winding 109 of the leakage transformer 102 is rectified by the secondary side rectifier circuit 111 to be a DC high voltage, which is applied across the anode and the cathode of the magnetron 112. A tertiary winding 110 of the leakage transformer 102 supplies current to the cathode of the magnetron 112.

The first semiconductor switching device 103 is configured by an IGBT and a flywheel diode parallel-connected to the IGBT. The second semiconductor switching device 104 is similarly configured by an IGBT and a flywheel diode.

The drive section 113 includes an oscillation section for generating a drive signal for the first semiconductor switching device 103 and the second semiconductor switching device 104, and the oscillation section generates the signal of a predetermined frequency. The drive section 113 supplies the first semiconductor switching device 103 and the second semiconductor switching device 104 with complementary ON / OFF drive signals.

As a result, the first semiconductor switching device 103 and the second semiconductor switching device 104 are driven alternately.

However, in the case of the inverter power supply circuit for the microwave oven, the effective resistance of the magnetron 112 is approximately infinite (open) during the period from the start of the operation of the inverter power supply circuit to the start of the oscillation of the magnetron 112.

Thus, the impedance of the secondary side of the leakage transformer 102 is considered to be open, and the effective inductance of the primary winding 108 of the leakage transformer 102 becomes larger. As a result, the resonance frequency of the primary winding 108 and the second condenser 106 falls down to, for example, f01 shown in the characteristic curve (B) in Fig. 5A, and the degree of sharpness of resonance (= Q) gets higher.

The voltage generated on the secondary side of the leakage transformer 102 in this case gets very high as shown by the characteristic curve (D) of Fig. 5B; thus, the voltage has to be controlled to prevent the an excessive voltage from being applied to the magnetron 112.

In addition, in the course of the voltage control for the leakage transformer 102, in order to reduce the required time until the magnetron 112 starts to oscillate, more cathode current (heater current) for the magnetron 112 needs to be supplied.

In order to strike a balance between the control of the application of the excessive voltage to the magnetron 112 and the reduction in the required time until the magnetron 112 starts to oscillate, the following modulation control of the switching frequency is performed. In the vicinity of the phases of 90 degrees and 270 degrees, where the instantaneous voltage of the commercial power source is the highest, the switching frequency is set high to control the boost ratio of the voltage of the tertiary winding 110 of the leakage transformer 102 to the commercial power source. On the other hand, in the vicinity of the phases of 0 degree and 180 degrees, where the instantaneous voltage of the commercial power source is the lowest, the switching frequency is lowered down to the vicinity of the resonance frequency of f01 in order to increase the boost ratio.

In the voltage control described above, there is used, for example, a circuit configuration for controlling the maximum voltage at the connection point (E) in the resonance circuit to be constant. At the connection point (E), the primary winding 108 of the leakage transformer 102 and the second condenser 106 are connected together. In addition, as a base waveform for a switching frequency control signal, the information of the waveform of the full-wave rectification of the commercial power source is used, for example.

However, since the degree of sharpness of the resonance circuit is very high as described above until the magnetron 112 starts to oscillate, the voltage control is likely to be unstable and the excessive voltage is sometimes applied to the magnetron 112 and the secondary side rectifier circuit 111, with the result that a component was broken.

In addition, there is a problem that moding (abnormal oscillation) is likely to occur because the oscillation is unstable just after the magnetron 112 starts to oscillate.

When the moding is occurring, the operation voltage (ebm) of the magnetron 112 gets very high compared to when the oscillation is stable, and in some cases the effective resistance of the magnetron 112 momentarily becomes approximately infinite (open). As a result, the voltage applied to the secondary side rectifier circuit 111 is likely to be too high, and the component is sometimes broken.

EP 2023690 A1 discloses a system according to the preamble of claim 1.

### Citation List

### Patent Literature

Patent Literature 1: Unexamined Japanese Patent Publication No. 2000-58252

### Summary of Invention

### Technical Problem

A theme of the present invention is to perform voltage control which prevents an excessive voltage from being applied to the magnetron and the secondary side rectifier circuit (all-wave voltage-doubler rectifier circuit) during the period until the magnetron starts to oscillate, in other words, during the period when the degree of sharpness of the resonance circuit is very high, and is thus able to reduce the required time for the magnetron to start to oscillate. An object of the present invention is to provide a power control apparatus for high-frequency dielectric heating in which addition of a very simple circuit easily prevents beforehand an excessive voltage from being applied to the secondary side rectifier circuit also in a moding occurring period just after the magnetron starts to oscillate.

### Solution to Problem

According to the present invention, a system for high-frequency dielectric heating comprises an inverter power supply and a power control apparatus for controlling the inverter power supply circuit, the inverter power supply including: a DC power supply circuit configured to generate a DC power source produced by rectifying a voltage of an AC power source; at least one or more of a series circuit which has at least two semiconductor switching devices and to which the DC power source is input; a resonance circuit which is connected to the series circuit and includes a primary winding of a leakage transformer and a condenser, the primary winding and the condenser being series-connected; and a rectifier circuit connected to a secondary winding of the leakage transformer and configured to supply high voltage to a magnetron, and the power control apparatus comprising a control circuit which comprises: an input current detection section configured to detect an input current of the AC power source and to output input current information; an input voltage detection section configured to detect an input voltage of the AC power source and to output power supply voltage waveform information; a resonance voltage comparison section configured to output resonance voltage control information based on a resonance circuit voltage information taken from the leakage transformer; and an input current comparison section configured to output power control information, based on the input current information; wherein that the control circuit further comprises: a magnetron oscillation detection section configured to determine, when a predetermined time has elapsed after the input current information is compared with a threshold value of the magnetron oscillation comparison information and the input current information exceeds the threshold value of the magnetron oscillation comparison information, that the magnetron is oscillating stably and set the magnetron oscillation detection information to be true; a mixing circuit configured to generate a switching frequency control information from the power supply voltage waveform information, based on the resonance voltage control information or the power control information selected depending on the magnetron oscillation detection information; a minimum frequency limiting circuit configured to select a predetermined minimum frequency, depending on the magnetron oscillation detection information so as to limit a minimum frequency of the switching frequency control information having been output from the mixing circuit; and a switching pulse generation section configured to generate drive signals each for driving each of the semiconductor switching devices, based on the switching frequency control information from the minimum frequency limiting circuit and output each of the drive signals to each of the semiconductor switching devices.

### Advantageous Effects of Invention

According to the present invention, a highly-reliable power control apparatus for high-frequency dielectric heating can be provided which surely prevents an excessive voltage from being applied to at least a magnetron during a period until the magnetron starts to oscillate stably, and realizes the reduction in the time until the magnetron starts to oscillation.

### Brief Description of Drawings

Fig. 1 is a circuit diagram showing an inverter power supply circuit with a two-transistor bridge arm structure and a control circuit for a power control apparatus for high-frequency dielectric heating for controlling the inverter power supply circuit of a first embodiment according to the present invention;
Fig. 2A is a circuit diagram showing an example of an oscillation circuit of the control circuit of the first embodiment;
Fig. 2B is a waveform diagram showing how the frequency of a triangular carrier wave changes depending on the potential of a switching frequency control signal;
Fig. 3A shows diagrams of the waveforms produced at different points in the control circuit of the first embodiment when the magnetron is oscillating stably;
Fig. 3B shows diagrams of the waveforms produced at different points in the control circuit of the first embodiment when the magnetron is oscillating unstably;
Fig. 4 is a block diagram showing a mixing circuit and a part of a minimum frequency limiting circuit of the control circuit of the first embodiment;
Fig. 5A is a waveform diagram showing frequency-current characteristics of an inverter power supply circuit when a constant voltage is applied to a serial resonance circuit;
Fig. 5B is a waveform diagram showing frequency-voltage characteristics in the case shown in Fig. 5A; and
Fig. 6 is a circuit diagram showing a resonance type high-frequency heating device driven by a conventional two-transistor bridge switching device.

### Description of Embodiments

A power control apparatus of a first aspect according to the present invention is for high-frequency dielectric heating for controlling an inverter power supply circuit which includes: a DC power supply circuit configured to generate a DC power source produced by rectifying a voltage of an AC power source; at least one or more of a series circuit which has at least two semiconductor switching devices and to which the DC power source is input; a resonance circuit which is connected to the series circuit and includes a primary winding of a leakage transformer and a condenser, the primary winding and the condenser being series-connected; and a rectifier circuit connected to a secondary winding of the leakage transformer and configured to supply high voltage to a magnetron, and the power control apparatus comprises a control circuit which includes:
an input current detection section configured to detect an input current of the AC power source and to output input current information;
an input voltage detection section configured to detect an input voltage of the AC power source and to output power supply voltage waveform information;
a resonance voltage comparison section configured to output resonance voltage control information based on a resonance circuit voltage information taken from the leakage transformer;
an input current comparison section configured to output power control information, based on the input current information;
a magnetron oscillation detection section configured to determine, when a predetermined time has elapsed after the input current information is compared with a threshold value of the magnetron oscillation comparison information and the input current information exceeds the threshold value of the magnetron oscillation comparison information, that the magnetron is oscillating stably and set the magnetron oscillation detection information to be true;
a mixing circuit configured to generate a switching frequency control information from the power supply voltage waveform information, based on the resonance voltage control information or the power control information selected depending on the magnetron oscillation detection information;
a minimum frequency limiting circuit configured to select a predetermined minimum frequency, depending on the magnetron oscillation detection information so as to limit a minimum frequency of the switching frequency control information having been output from the mixing circuit; and
a switching pulse generation section configured to generate drive signals each for driving each of the semiconductor switching devices, based on the switching frequency control information from the minimum frequency limiting circuit and output each of the drive signals to each of the semiconductor switching devices.

In the power control apparatus for high-frequency dielectric heating of the first aspect according to the present invention configured as described above, during the period until the magnetron starts to oscillate stably, an excessive voltage can be prevented from being applied to the magnetron and the rectifier circuit on the secondary side of the leakage transformer, and the reduction in the required time until the magnetron starts to oscillate stably can be realized. In addition, in the power control apparatus for high-frequency dielectric heating of the first aspect according to the present invention, the influence of the resonance circuit having a very high degree of sharpness can be eliminated by adding a simple circuit.

In the first aspect, the power control apparatus for high-frequency dielectric heating of a second aspect according to the present invention includes the minimum frequency limiting circuit which may be configured to limit, during an unstable oscillation period until the magnetron oscillation detection section sets the magnetron oscillation detection information to be true, the minimum frequency of the switching frequency by clipping a minimum potential of the switching frequency control information having been output from the mixing circuit to a potential, which is lower than a potential when the magnetron is oscillating stably.

In the first or second aspect, the power control apparatus for high-frequency dielectric heating of a third aspect according to the present invention includes the minimum frequency limiting circuit which may be configured to clip, during a stable oscillation period when the magnetron oscillation detection information is set to be true by the magnetron oscillation detection section, a minimum potential of the switching frequency control information having been output from the mixing circuit to a potential, which is higher than the potential for an unstable oscillation period when the magnetron is oscillating unstably, so as to lower the minimum frequency of the switching frequency than during the unstable oscillation period.

In the power control apparatus for high-frequency dielectric heating of a fourth aspect according to the present invention, the mixing circuit in the first to third aspects may be configured to cause, during an unstable oscillation period until the magnetron oscillation detection information becomes true, the resonance voltage control information to act on the switching frequency control information, based on the magnetron oscillation detection information, so as to perform voltage control in which an applied voltage to the magnetron is controlled during the unstable oscillation period of the magnetron.

In the power control apparatus for high-frequency dielectric heating of a fifth aspect according to the present invention, the magnetron oscillation detection section in the first to fourth aspects may be configured to detect, based on an event that the input current information is compared with the threshold value of the magnetron oscillation comparison information and a potential representing the input current information exceeds a potential representing the predetermined threshold value, that the magnetron has started to oscillate, and is configured to determine, after a predetermined period has elapsed since the start of the oscillation, that the magnetron is oscillating stably and set the magnetron oscillation detection information to be true.

In the power control apparatus for high-frequency dielectric heating of a sixth aspect according to the present invention, the mixing circuit in the first to fifth aspects may be configured to, when the magnetron oscillation detection information is set to be true, cause the power control information to act on the switching frequency control information, so as to perform power control in which an input current, during a stable oscillation period of the magnetron, to the inverter power supply circuit is controlled.

In the power control apparatus for high-frequency dielectric heating of a seventh aspect according to the present invention, the mixing circuit in the first to sixth aspects may be configured to use, during a stable oscillation period when the magnetron oscillation detection information is output to be true, input current waveform information obtained by rectifying an input current of the AC power source instead of using the power supply voltage waveform information.

A power control apparatus for high-frequency dielectric heating of an eighth aspect according to the present invention may be configured to comprise:
a DC power supply circuit configured to generate a DC power source obtained by rectifying a voltage of an AC power source circuit;
at least one or more of a series circuit which has two semiconductor switching devices;
a resonance circuit in which a primary winding of a leakage transformer and a condenser is series-connected;
a rectifier circuit connected to a secondary winding of the leakage transformer and configured to supply high voltage to a magnetron; and
a control circuit configured to control an inverter power supply circuit in which a switching frequency of an on/off drive signal for the semiconductor switching devices is modulated and converted into high-frequency electric power, and an output generated on a secondary side of the leakage transformer is applied to the magnetron so as to drive the magnetron to oscillate,
wherein the control circuit comprises:
   a magnetron oscillation detection section configured to detect when the magnetron starts to oscillate, based on an input current of the AC power source, and configured to set the magnetron oscillation detection information to be true when a predetermined period has elapsed after detecting that the magnetron has started to oscillate;
   a voltage/power control function which controls by switching between a voltage control in which an applied voltage to the magnetron is controlled and a power control in which an input current to the inverter power supply circuit is controlled; and
   a minimum frequency limiting function which limits the inverter power supply circuit by switching a minimum frequency of the switching frequency between a first frequency and a second frequency higher than the first frequency,
wherein when the inverter power supply circuit starts to operate, the control circuit performs the voltage control and sets the minimum frequency of the switching frequency to the second frequency, and
wherein after the magnetron oscillation detection section sets the magnetron oscillation detection information to be true, the control circuit performs the power control and switches the minimum frequency of the switching frequency to the first frequency.

In the power control apparatus for high-frequency dielectric heating according to the present invention configured as described above, there can be realized the prevention of the application of an excessive voltage to the magnetron and the secondary side rectifier circuit during the period until the magnetron starts to oscillate stably, and also can be realized the reduction in the required time until the magnetron starts to oscillate; and by adding a simple circuit, the influence of the resonance circuit having a very high degree of sharpness can be eliminated.

In the following, a power control apparatus for high-frequency dielectric heating will be described as an embodiment of the present invention with reference to the attached drawings. However, a power control apparatus for high-frequency dielectric heating according to the present invention is not limited to the configuration of the power control apparatus for high-frequency dielectric heating described in the following embodiment, and includes a configuration of a power control apparatus for high-frequency dielectric heating based on a technical idea equivalent to the technical idea described in the following embodiment.

### (First Embodiment)

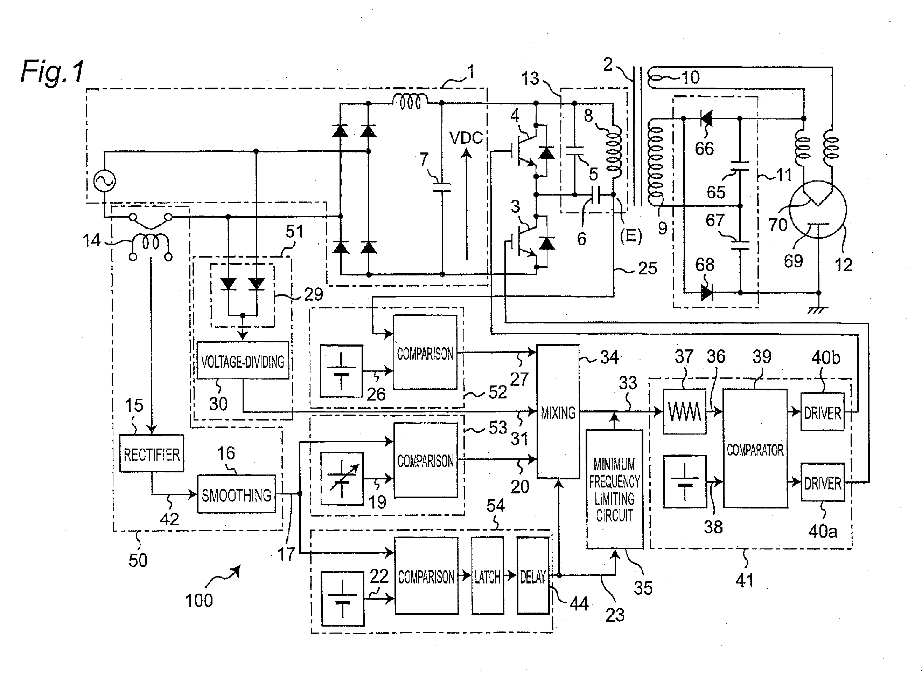

Fig. 1 shows: an inverter power supply circuit with a two-transistor bridge arm structure for driving a magnetron, which is a microwave generation device; and a power control apparatus for high-frequency dielectric heating for controlling the operation of the inverter power supply circuit of the first embodiment according to the present invention. In the first embodiment, an inverter power supply circuit with a two-transistor bridge arm structure will be described, but this disclosure can also apply to the inverter power supply circuit configured by a plurality of transistors.

As shown in Fig. 1, in the inverter power supply circuit of a two-transistor bridge structure, a main circuit on the primary side of a leakage transformer 2 is configured by a DC power supply circuit 1 for generating a DC power source which is made by rectifying and smoothing a commercial power source, the leakage transformer 2, a first semiconductor switching device 3, a second semiconductor switching device 4, a first condenser 5, a second condenser 6, and a third condenser 7 (smoothing capacitor). In addition, the inverter power supply circuit includes a secondary side of the leakage transformer 2, and to the secondary side of the leakage transformer 2 is connected a secondary side rectifier circuit 11. The secondary side rectifier circuit 11 in the first embodiment is configured by a series-connected body of two condensers 65 and 67 and a series-connected body of two diodes 66 and 68, and the two series-connected bodies are parallel-connected. Between the connection point of the two condensers 65 and 67 and the connection point of the two diodes 66 and 68, there is provided a secondary winding 9 of the leakage transformer 2. The secondary side rectifier circuit 11 supplies a magnetron 12 with a high voltage.

The DC power supply 1 full-wave rectifies the commercial power source to produce a DC voltage VDC and applies the produced DC voltage VDC to the series circuit made up of the second condenser 6 and a primary winding 8 of the leakage transformer 2 through the first semiconductor switching device 3. The first semiconductor switching device 3 and the second semiconductor switching device 4 are series-connected, and the series circuit of the primary winding 8 of the leakage transformer 2 and the second condenser 6 is parallel-connected with the second semiconductor switching device 4.

The first condenser 5 is parallel-connected to the second semiconductor switching device 4, and the capacitance of the first condenser 5 is set smaller than the capacitance of the second condenser 6. The first condenser 5 has the roll of a snubber to reduce spike noise. In the inverter power supply circuit of the first embodiment, the first condenser 5, the second condenser 6, and the primary winding 8 of the leakage transformer 2 constitute a snubber circuit 13. The output of the high voltage generated on the secondary winding 9 of the leakage transformer 2 is converted into a high DC voltage by the secondary side rectifier circuit 11, and the high DC voltage is applied across an anode 69 and a cathode 70 of the magnetron 12. A tertiary winding 10 of the leakage transformer 2 supplies the cathode 70 of the magnetron 12 with current.

The first semiconductor switching device 3 is configured by an IGBT and a flywheel diode being parallel-connected to the IGBT. The second semiconductor switching device 4 is similarly configured by an IGBT and a flywheel diode. As the semiconductor switching device, a switching device such as a thyristor and a GTO switching device can be used, for example.

A control circuit 100 of the power control apparatus for high-frequency dielectric heating outputs an intended drive signal so as to complementarily on/off drive the first semiconductor switching device 3 and the second semiconductor switching device 4.

As a result, the first semiconductor switching device 3 and the second semiconductor switching device 4 are alternately driven in an intended switching operation.

As shown in Fig. 1, the control circuit 100, of the power control apparatus for high-frequency dielectric heating, for controlling the switching operation of the semiconductor switching devices 3 and 4 of the inverter power supply circuit is equipped with an input current detection section 50 for detecting an input current of the inverter power supply circuit from the commercial power source, an input voltage detection section 51 for detecting an input voltage of the commercial power source, a resonance voltage comparison section 52, an input current comparison section 53, and a magnetron oscillation detection section 54. In the control circuit 100, there is also provided a mixing circuit 34, a minimum frequency limiting circuit 35, and a switching pulse generation section 41 for outputting drive signals each of which makes each of the semiconductor switching devices 3 and 4 turn on and off.

The input current detection section 50 of the control circuit 100 is configured by a current transformer 14 for detecting an input current from the commercial power source, a first rectifier circuit 15 for rectifying a detection signal from the current transformer 14, and a smoothing circuit 16 for smoothing a signal from the first rectifier circuit 15, and the input current detection section 50 generates an input current signal (input current information) 17.

The input voltage detection section 51 is equipped with a second rectifier circuit 29 for detecting the input voltage of the commercial power source and a voltage-dividing circuit 30, and generates a power supply voltage waveform signal (power supply voltage waveform information) 31.

The resonance voltage comparison section 52 compares a resonance circuit voltage signal (resonance circuit voltage information) 25 taken out at a connection point (E), at which the primary winding 8 of the leakage transformer 2 and the second condenser 6 are connected together, with a resonance voltage comparison signal (resonance voltage comparison information) 26 to output a resonance voltage control signal (resonance voltage control information) 27. In a comparison circuit in the resonance voltage comparison section 52, the voltages are compared, using the voltage having been set as the resonance voltage comparison signal 26 as a threshold value.

The input current comparison section 53 compares an input current comparison signal (input current comparison information) 19 set depending on the high-frequency output with the input current signal 17 from the input current detection section 50 to generate a power control signal (power control information) 20. In a comparison circuit in the input current comparison section 53, the voltages are compared, using the voltage having been set as the input current comparison signal 19 as a threshold value.

The magnetron oscillation detection section 54 detects the start of the oscillation of the magnetron 12, based on an event that the input current signal 17 exceeds a magnetron oscillation comparison signal (magnetron oscillation comparison information) 22, and then outputs a magnetron oscillation detection signal (magnetron oscillation detection information) 23 through a latch circuit and a delay circuit 44. In a comparison circuit in the magnetron oscillation detection section 54, the input current signal 17 is compared with the threshold value which is the voltage of the magnetron oscillation comparison signal 22.

The mixing circuit 34 inverts the power supply voltage waveform signal 31 and generates a switching frequency control signal 33, based on the AC component of the inverted power supply voltage waveform signal, the resonance voltage control information 27 selected depending on the magnetron oscillation detection signal 23, and the power control information 20.

The minimum frequency limiting circuit 35 limits the minimum frequency by switching the switching frequency control signal 33 output from the mixing circuit 34 to a second frequency selected, depending on the magnetron oscillation detection signal 23 or a first frequency lower than the second frequency.

The switching pulse generation section 41 is configured by an oscillation circuit 37 which is frequency-controlled depending on the switching frequency control signal 33 having been input so as to generate a triangular carrier wave 36, a comparator 39 for comparing the triangular carrier wave 36 with a slice signal 38, and drivers 40a and 40b for converting the output of the comparator 39 into drive signals each of which makes each of the first semiconductor switching device 3 and the second semiconductor switching device 4 turn on and off.

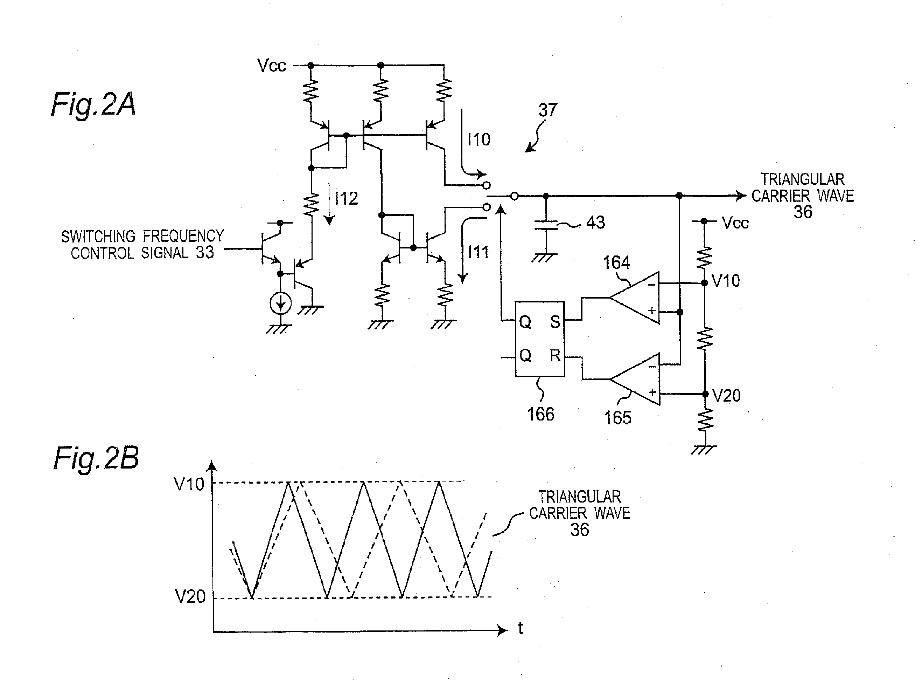

Fig. 2A is a circuit diagram showing a configuration of the oscillation circuit 37, which is controlled by the switching frequency control signal 33 to generate the triangular carrier wave 36.

In Fig. 2A, the oscillation circuit 37 has a configuration in which the condenser 43 is charged/ discharged by currents I10 and I11 both reflecting the current I12, and the charge/discharge are switched to each other at each of reference voltages V10 and V20. As shown in Fig. 2A, the reference voltages V10 and V20 are made to be input into the comparators 164 and 165, respectively, and then input into the latch circuit 166 for switching charge/discharge.

These charge/discharge currents I10 (charge) and I11 (discharge) reflect the potential of the switching frequency control signal 33, and are converted into a larger current when the potential is lower.

Therefore, the oscillation frequency changes depending on the potential of the switching frequency control signal 33, and the oscillation frequency is higher when the potential is lower.

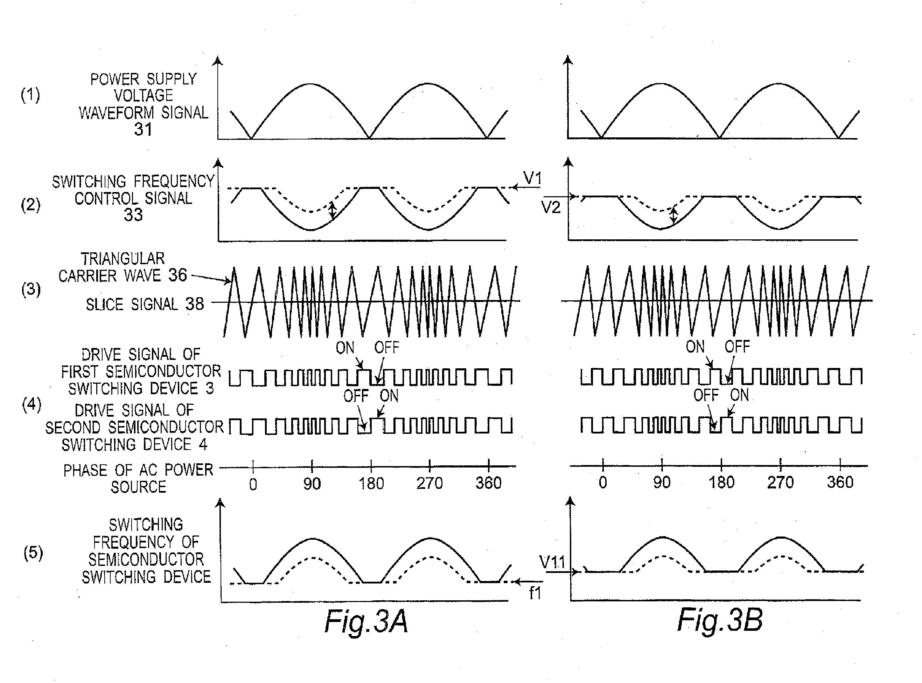

The waveform of Fig. 2B shows the relationship between the potential of the switching frequency control signal 33 and the frequency of the triangular carrier wave 36. In Fig. 2B, the triangular carrier wave in a solid line represents the case that the potential of the switching frequency control signal 33 is low, and the triangular carrier wave in a broken line represents the case that the potential of the switching frequency control signal 33 is high. In Figs. 3A and 3B described later, the same line types represent this relationship.

Figs. 3A and 3B are diagrams of waveforms at different points generated in the control circuit 100. It should be noted that the waveform diagrams of Figs. 3A and 3B show conceptual operations of the control circuit 100 of the first embodiment, and do not show the actual waveforms. Fig. 3A shows the diagrams of the waveforms at different points after the magnetron oscillation detection section 54 outputs the magnetron oscillation detection signal 23, in other words, after the magnetron oscillation detection information (23) becomes true. To put it into other words, Fig. 3A shows the diagrams of the waveforms at different points when the magnetron 12 is oscillating stably. On the other hand, Fig. 3B shows the diagrams of the waveforms at different points during the period when the magnetron is oscillating unstably and during the period from the activation of the magnetron to the output of the magnetron oscillation detection signal 23 from the magnetron oscillation detection section 54.

In the waveform diagrams of Fig. 3A in the case of the stable oscillation of the magnetron, (1) shows an example of a power supply voltage waveform signal 31 output from the input voltage detection section 51, (2) shows an example of the switching frequency control signal 33 output from the mixing circuit 34, (3) shows examples of the triangular carrier wave 36 and the slice signal 38 generated in the switching pulse generation section 41, (4) shows examples of the drive signals for each of the first semiconductor switching device 3 and the second semiconductor switching device 4, and (5) shows examples of the switching frequencies of each of the semiconductor switching devices 3 and 4. The waveform diagrams denoted by (1) to (5) of Fig. 3B correspond to the waveform diagrams denoted by (1) to (5) of Fig. 3A, respectively.

As shown in the waveform diagrams of Fig. 3A, the power supply voltage waveform signal 31 input into the mixing circuit 34 is inverted and vertically potential converted depending on a power control signal 20 from the input current comparison section 53 to become a switching frequency control signal 33 (see (2) of Fig. 3A).

In addition, the high potential side of the switching frequency control signal 33 is clipped to the potential V1 in the minimum frequency limiting circuit 35, and the minimum frequency is thus limited to f1.

The triangular carrier wave 36, whose frequency changes depending on the potential of the switching frequency control signal 33, is compared with the slice signal 38, and is converted into the drive signals each for each of the first semiconductor switching device 3 and the second semiconductor switching device 4 (see (4) of Fig. 3A).

The switching frequencies of the drive signals each for each of the first semiconductor switching device 3 and the second semiconductor switching device 4 schematically change depending on the phase of the AC power source as shown in (5) of Fig. 3A. In particular, since the instantaneous voltage value of the commercial power source is low in the vicinities of the phases 0 degree (360 degrees) and 180 degrees of the AC power source, the switching frequency is lowered to compensate the decrease in the instantaneous input voltage.

On the other hand, in the vicinity of the phases of 90 degrees and 270 degrees of the AC power source, since the instantaneous voltage value of the commercial power source is high, the switching frequency is raised to control the increase in the instantaneous input voltage.

With the above-described configuration, the peak of the input power is controlled at all phases of the AC power source, and at the same time, the decrease in the input power source is controlled for a broader phase range, in other words, the distortion of the input current waveform is controlled.

In (2) and (5) of Fig. 3A, the waveforms in solid lines in the waveforms of the switching frequency control signal 33 and the switching frequencies of the semiconductor switching devices 3 and 4 represent the case that the input power is controlled (corrected) to be lower than the waveforms in broken lines. The vertical shifts between the waveforms in solid lines and the waveforms in broken lines shown in (2) and (5) of Fig. 3A are created due to the power control signal 20 from the input current comparison section 53.

On the other hand, as shown in Fig. 3B, during the period when the magnetron is oscillating unstably and the period until the magnetron oscillation detection signal 23 is output, the power supply voltage waveform signal 31 output from the input voltage detection section 51 is inverted and vertically potential converted depending on the resonance voltage control signal 27 from the resonance voltage comparison section 52. In addition, the power supply voltage waveform signal 31 is clipped to the potential V2 by the minimum frequency limiting circuit 35, so that the minimum frequency is limited to f11. In this case, the clip on the high potential side is set to the lower potential V2 compared to the case of the stable oscillation (the case of V1 shown in Fig. 3A), and the minimum frequency f11 of the switching frequency is accordingly higher.

As described above and shown by the waveform diagrams of Fig. 3B, the power supply voltage waveform signal 31 input into the mixing circuit 34 is inverted and vertically potential converted based on the resonance voltage control signal 27 from the resonance voltage comparison section 52, and the switching frequency control signal 33 is thus generated (see (2) of Fig. 3B). In this process, the high potential side of the switching frequency control signal 33 is clipped to the potential V2 by the minimum frequency limiting circuit 35, so that the minimum frequency is limited to f11.

The triangular carrier wave 36, whose frequency changes depending on the potential of the switching frequency control signal 33, is compared with the slice signal 38 to be converted to the drive signals each for each the first semiconductor switching device 3 and the second semiconductor switching device 4 (see (4) of Fig. 3B).

The switching frequencies of the drive signals each for each of the first semiconductor switching device 3 and the second semiconductor switching device 4 schematically change depending on the phase of the AC power source as shown in (5) of Fig. 3B. In particular, since the instantaneous voltage value of the commercial power source is low in the vicinities of the phases 0 degree (360 degrees) and 180 degrees of the AC power source, the switching frequency is lowered to compensate the decrease in the instantaneous input voltage.

As shown in Fig. 3B, during the period when the magnetron is oscillating unstably and the period until the magnetron oscillation detection signal 23 is output, since the instantaneous voltage of the commercial power source is low in the vicinities of the phases of 0 degree (360 degrees) and 180 degrees of the AC power source in the similar way as during the period when the magnetron is oscillating stably, the switching frequency is lowered to compensate the decrease in instantaneous heater power of the magnetron.

On the other hand, in the vicinity of the phases of 90 degrees and 270 degrees of the AC power source, since the instantaneous voltage value of the commercial power source is high, the switching frequency is raised to control the instantaneous increase in the input voltage on the secondary side of the high voltage transformer, in other words, to control the instantaneous applied voltage to the magnetron.

With the configuration described above, the decrease in the heater power can be compensated for broader phase while the decrease in the peak of the applied voltage to the magnetron is controlled at all phases of the AC power source. In other words, in the power control apparatus for high-frequency dielectric heating of the first embodiment is configured such that more power can be supplied to the magnetron at the time of activation, and the required time from the activation to the stable oscillation of the magnetron can thus be reduced.

Further, just after the magnetron starts to oscillate, since the configuration is made such that the instantaneous applied voltage to the magnetron is controlled by using the resonance voltage control signal 27 (resonance voltage control information) as the control signal, the input power can be kept low.

Therefore, by using the power control apparatus for high-frequency dielectric heating of the first embodiment, there is less need for thermal electrons from a cathode 70 of the magnetron 12, and the thermal electrons are not likely to be short; thus, the moding due to lack of thermal electrons is not likely to occur.

In (2) and (5) of Fig. 3B, the waveforms in solid lines in the waveforms of the switching frequency control signal 33 and the switching frequencies of the semiconductor switching devices 3 and 4 represent the case that the applied voltage to the magnetron is controlled (corrected) to be lower than the waveforms in broken lines. The vertical shifts between the waveforms in solid lines and the waveforms in broken lines shown in (2) and (5) of Fig. 3B are created due to the resonance voltage control information 27 from the resonance voltage comparison section 52 as described later.

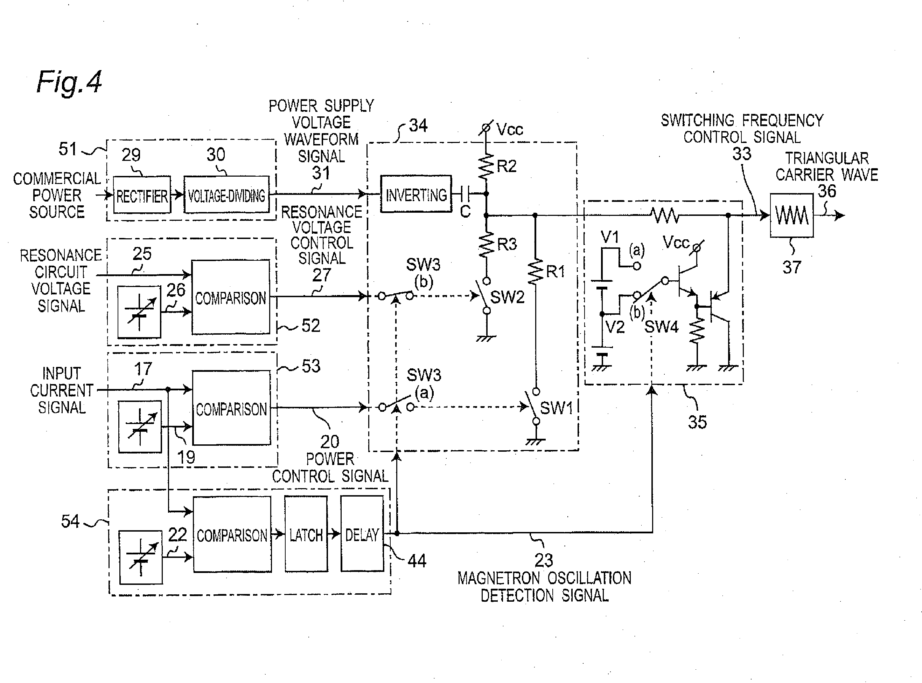

Fig. 4 is a circuit diagram showing an example of the mixing circuit 34 and the minimum frequency limiting circuit 35. In the mixing circuit 34, the power supply voltage waveform signal 31 (power supply voltage waveform information) input from the input voltage detection section 51 is subjected to an inverting process, and the AC component is then taken out with a coupling condenser.

In the input current comparison section 53, the value (potential) of the input current signal 17 (input current information) from the input current detection section 50 is compared with the threshold value (potential) of the input current comparison signal (input current comparison information) 19 set depending on the high-frequency output. When the input current signal 17 is higher than the input current comparison signal 19, the input current comparison section 53 outputs the power control signal 20. When the output power control signal (power control information) 20 is input into the mixing circuit 34, a switch SW1 is closed in the mixing circuit 34 to reduce the DC component of the switching frequency control signal 33 so that the polarity is controlled in the direction to raise the switching frequency, in other words, to decrease the input current.

In the resonance voltage comparison section 52, when the value (potential) of the resonance circuit voltage signal (resonance circuit voltage information) 25 taken out from the connection point (E), at which the primary winding 8 of leakage transformer 2 and the second condenser 6 are connected together, is higher than the threshold value (potential) of the resonance voltage comparison signal 26, the resonance voltage control signal 27 is output. In the mixing circuit 34, to which the resonance voltage control signal 27 has been input from the resonance voltage comparison section 52, a switch SW2 is closed to reduce the DC component of the switching frequency control signal 33 so that the polarity is controlled in the direction to raise the switching frequency, in other words, to lower the resonance circuit voltage signal (resonance voltage information) 25. This resonance voltage is reflected to the applied voltage to the magnetron 12 through the leakage transformer 2 and the like.

When the inverter power supply circuit of the first embodiment starts a switching operation (when oscillating unstably), since the magnetron oscillation detection section 54 does not detect the oscillation of the magnetron 12, the magnetron oscillation detection signal 23 is not output; thus the magnetron oscillation detection information is not true; accordingly, the switch SW3(b) is closed to enable the resonance voltage control signal 27 to act on the switching frequency control signal 33. As a result, when the magnetron starts to oscillate (when oscillating unstably), the inverter power supply circuit of the first embodiment is performing a voltage control function for controlling the applied voltage to the magnetron 12.

The magnetron oscillation detection section 54 detects the start of the oscillation of the magnetron 12, based on an event that the value (potential) of the input current signal (input current information) 17 exceeds the threshold value (potential) of the magnetron oscillation comparison signal (magnetron oscillation comparison information) 22. Since the start of the oscillation is detected and until the predetermined period set by the delay circuit 44 has elapsed, the voltage control function continues to be performed.

The magnetron oscillation detection section 54 outputs, after detecting the start of the oscillation of the magnetron 12, based on an event that the input current signal 17 exceeds the magnetron oscillation comparison signal 22 and still after the predetermined period set by the delay circuit 44 has elapsed, the magnetron oscillation detection signal 23, which is the available (true) magnetron oscillation detection information. The mixing circuit 34 closes, upon the output of the magnetron oscillation detection signal 23, a switch SW3(a) to enable the power control signal 20 to act on the switching frequency control signal 33. As a result, in the inverter power supply circuit of the first embodiment, at the time after a predetermined period has elapsed since the magnetron started to oscillate, there is being performed a power control function for controlling the input current to the inverter power supply circuit.

In the mixing circuit 34 configured as described above, the AC component of the inverted power supply voltage waveform signal 31 is controlled by the resonance voltage control signal 27 or the power control signal 20, and is then input into the minimum frequency limiting circuit 35.

In the minimum frequency limiting circuit 35, during the period when the magnetron oscillation detection signal 23 is not output (unstable oscillation period), in other words, during the period when the magnetron oscillation detection information is not true, a switch SW4 is connected to (b) side (see Fig. 4) and the voltage V2 is selected.

As described above, when the magnetron oscillation detection signal 23 has been output from the magnetron oscillation detection section 54, the switch SW4 is connected to (a) side (see Fig. 4), and the voltage V1, which is higher than the voltage V2, is selected.

Therefore, the limit value on the high potential side of the switching frequency control signal 33, that is to say, the minimum side limit frequency of the switching frequency is changed depending on the state of the unstable oscillation/ stable oscillation of the magnetron 12; and when the magnetron 12 is oscillating unstably and when the magnetron starts to oscillate, the limit value is controlled to be the second frequency f11, and after the oscillation becomes stable and the magnetron oscillation detection information 23 is output, the limit value is controlled to become the first frequency f1, which is lower than the second frequency f11.

As described above, in the power control apparatus for high-frequency dielectric heating of the first embodiment, when the magnetron 12 starts to oscillate and when the magnetron 12 is oscillating unstably, the minimum frequency is limited to the second frequency f11 different from the resonance frequency f01, so that the voltage control function operates stably and the moding of the magnetron at the time of staring oscillation is controlled. On the other hand, when the magnetron 12 is oscillating stably, the minimum frequency is limited to the first frequency f1, which is lower than the second frequency f11 and different from the resonance frequency f01, so that the power control function can operate stably and the input current waveform distortion can be reduced.

Although not shown in the diagram, it should be noted that the power control apparatus for high-frequency dielectric heating of the first embodiment can employ, during the period when the available (true) magnetron oscillation detection information (magnetron oscillation detection signal 23) is being output, the input current waveform information (input current waveform signal 42) obtained through the current transformer 14 and the first rectifier circuit 15 shown in Fig. 1 instead of employing the power supply voltage waveform information (power supply voltage waveform signal 31) of Fig. 4. The power control apparatus for high-frequency dielectric heating configured as described above is more effective for correcting the distortion of the input power source current waveform.

As described above, using the input current waveform information instead of the power supply voltage waveform information is based on the principle that the information of the distortion of the input power source current waveform contained in the input current waveform information can be corrected (cancelled) with the reversed polarity.

In the present invention, during the period until the magnetron starts to oscillate stably, a voltage control is performed which realizes the prevention of the application of an excessive voltage to the magnetron and the rectifier circuit on the secondary side of the leakage transformer; and the reduction in the time period until the magnetron starts to oscillate stably. In the present invention, addition of a simple circuit is able to eliminate the influence of the resonance circuit having a very high degree of sharpness.

In addition, according to the present invention, also during the period when the magnetron is oscillating unstably just after starting to oscillate stably, an excessive voltage can be prevented from being applied to the magnetron and the rectifier circuit on the secondary side of the leakage transformer.

Further, according to the present invention, a power control is performed which realizes the reduction in the input current waveform distortion also during the period when the magnetron is oscillating stably, and the influence of the resonance circuit having a very high degree of sharpness can be eliminated.

In the power control apparatus for high-frequency dielectric heating of the present invention, when the magnetron is oscillating unstably and when the magnetron starts to oscillate, a control can be performed in which the input power into the cathode is increased while the peak value of the applied magnetron voltage is limited; therefore, an excessive voltage can be prevented from being applied to the magnetron and the rectifier circuit on the secondary side, and the required time until the start of oscillation can be reduced.

Further, according to the present invention, during the period since the magnetron starts to oscillate and until a predetermined time has elapsed, in other words, during the period when the oscillation of the magnetron is unstable, the voltage control function is successfully performed to control the moding while preventing an excessive voltage from being applied to the magnetron and the rectifier circuit on the secondary side.

In addition, according to the present invention, when the magnetron is oscillating, the peak value of the instantaneous input voltage can be controlled and the phase range of the commercial power source in which the magnetron oscillates can be broaden; and the distortion of the current waveform of the commercial power source can thus be controlled.

The present invention has been described in detail to a certain extent with reference to the embodiment; however, the details of the disclosed configuration according to the embodiment can be changed, and the combination and order of the elements of the embodiment can be modified without departing from the scope of the claimed invention.

### Industrial Applicability

According to the present invention, there can be provided a power control apparatus for high-frequency dielectric heating which is reliable and in which the magnetron can start to oscillate stably in a short time; thus, the present invention is useful for high-frequency heating using a magnetron such as a microwave oven.

### Reference Signs List

- 1:: DC power supply circuit
- 2:: leakage transformer
- 3:: first semiconductor switching device
- 4:: second semiconductor switching device
- 8:: primary winding
- 9:: secondary winding
- 10:: tertiary winding
- 11:: secondary side rectifier circuit
- 12:: magnetron
- 17:: input current signal (input current information)
- 19:: current comparison signal (input current comparison information)
- 20:: power control signal (power control information)
- 22:: magnetron oscillation comparison signal (magnetron oscillation comparison information)
- 23:: magnetron oscillation detection signal (magnetron oscillation detection information)
- 25:: resonance circuit voltage signal (resonance circuit voltage information)
- 26:: resonance voltage comparison signal (resonance voltage comparison information)
- 27:: resonance voltage control signal (resonance voltage control information)
- 31:: power supply voltage waveform signal (power supply voltage waveform information)
- 33:: switching frequency control signal
- 34:: mixing circuit
- 41:: switching pulse generation section
- 42:: input current waveform signal (input current waveform information)
- 50:: input current detection section
- 51:: input voltage detection section
- 52:: resonance voltage comparison section
- 53:: input current comparison section
- 54:: magnetron oscillation detection section
- 100:: control circuit

## Claims

1. A system for high-frequency dielectric heating comprising an inverter power supply and a power control apparatus for controlling the inverter power supply circuit, the inverter power supply including: a DC power supply circuit configured to generate a DC power source produced by rectifying a voltage of an AC power source; at least one or more of a series circuit which has at least two semiconductor switching devices (3, 4) and to which the DC power source is input; a resonance circuit (13) which is connected to the series circuit and includes a primary winding (8) of a leakage transformer (2) and a condenser (6), the primary winding (8) and the condenser (6) being series-connected; and a rectifier circuit (11) connected to a secondary winding (9) of the leakage transformer (2) and configured to supply high voltage to a magnetron (12), and
the power control apparatus comprising a control circuit (100) which comprises:
an input current detection section (50) configured to detect an input current of the AC power source and to output input current information;
an input voltage detection section (51) configured to detect an input voltage of the AC power source and to output power supply voltage waveform information;
a resonance voltage comparison section (52) configured to output resonance voltage control information based on a resonance circuit voltage information taken from the leakage transformer (2); and
an input current comparison section (53) configured to output power control information, based on the input current information;
**characterized in that** the control circuit (100) further comprises:
a magnetron oscillation detection section (54) configured to determine, when a predetermined time has elapsed after the input current information is compared with a threshold value of the magnetron oscillation comparison information and the input current information exceeds the threshold value of the magnetron oscillation comparison information, that the magnetron (12) is oscillating stably and set the magnetron oscillation detection information to be true;
a mixing circuit (34) configured to generate a switching frequency control information from the power supply voltage waveform information, based on the resonance voltage control information or the power control information selected depending on the magnetron oscillation detection information;
a minimum frequency limiting circuit (35) configured to select a predetermined minimum frequency, depending on the magnetron oscillation detection information so as to limit a minimum frequency of the switching frequency control information having been output from the mixing circuit; and
a switching pulse generation section (41) configured to generate drive signals each for driving each of the semiconductor switching devices (3, 4), based on the switching frequency control information from the minimum frequency limiting circuit (35) and output each of the drive signals to each of the semiconductor switching devices (3, 4).

2. The system for high-frequency dielectric heating according to claim 1, wherein the minimum frequency limiting circuit (35) is configured to limit, during an unstable oscillation period until the magnetron oscillation detection section sets the magnetron oscillation detection information to be true, the minimum frequency of the switching frequency by clipping a minimum potential of the switching frequency control information having been output from the mixing circuit to a potential, which is lower than a potential when the magnetron (12) is oscillating stably.

3. The system for high-frequency dielectric heating according to claim 1 or 2, wherein the minimum frequency limiting circuit (35) is configured to clip, during a stable oscillation period when the magnetron oscillation detection information is set to be true by the magnetron oscillation detection section (54), a minimum potential of the switching frequency control information having been output from the mixing circuit (34) to a potential, which is higher than the potential for an unstable oscillation period when the magnetron (12) is oscillating unstably, so as to lower the minimum frequency of the switching frequency than during the unstable oscillation period.

4. The system for high-frequency dielectric heating according to any one of claims 1 to 3, wherein the mixing circuit (34) is configured to cause, during an unstable oscillation period until the magnetron oscillation detection information becomes true, the resonance voltage control information to act on the switching frequency control information, based on the magnetron oscillation detection information, so as to perform voltage control in which an applied voltage to the magnetron (12) is controlled during the unstable oscillation period of the magnetron (12).

5. The system for high-frequency dielectric heating according to any one of claims 1 to 4, wherein the magnetron oscillation detection section (54) is configured to detect, based on an event that the input current information is compared with the threshold value of the magnetron oscillation comparison information and a potential representing the input current information exceeds a potential representing the predetermined threshold value, that the magnetron (12) has started to oscillate, and is configured to determine, after a predetermined period has elapsed since the start of the oscillation, that the magnetron (12) is oscillating stably and set the magnetron oscillation detection information to be true.

6. The system for high-frequency dielectric heating according to any one of claims 1 to 5, wherein the mixing circuit (34) is configured to, when the magnetron oscillation detection information is set to be true, cause the power control information to act on the switching frequency control information, so as to perform power control in which an input current, during a stable oscillation period of the magnetron (12), to the inverter power supply circuit is controlled.

7. The system for high-frequency dielectric heating according to any one of claims 1 to 6, wherein the mixing circuit (34) is configured to use, during a stable oscillation period when the magnetron oscillation detection information is output to be true, input current waveform information obtained by rectifying an input current of the AC power source instead of using the power supply voltage waveform information.

8. The system for high-frequency dielectric heating according to any one of claims 1 to 7, wherein
the control circuit (100) is configured to control the inverter power supply circuit in which a switching frequency of an on/off drive signal for the semiconductor switching devices (3, 4) is modulated and converted into high-frequency electric power, and an output generated on a secondary side of the leakage transformer (2) is applied to the magnetron (12) so as to drive the magnetron (12) to oscillate, and
the control circuit (100) comprises:
a voltage/power control function which controls by switching between a voltage control in which an applied voltage to the magnetron (12) is controlled and a power control in which an input current to the inverter power supply circuit is controlled; and
a minimum frequency limiting function which limits the inverter power supply circuit by switching a minimum frequency of the switching frequency between a first frequency and a second frequency higher than the first frequency,
wherein when the inverter power supply circuit starts to operate, the control circuit performs the voltage control and sets the minimum frequency of the switching frequency to the second frequency, and
wherein after the magnetron oscillation detection section sets the magnetron oscillation detection information to be true, the control circuit (100) performs the power control and switches the minimum frequency of the switching frequency to the first frequency.

## Patentansprüche

1. System zum dielektrischen Hochfrequenzerwärmen, das eine Wechselrichterstromversorgung und eine Leistungssteuervorrichtung zum Steuern der Wechselrichterstromversorgungsschaltung umfasst, wobei die Wechselrichterstromversorgung enthält: eine Gleichstromversorgungsschaltung, die konfiguriert ist, eine Gleichstromquelle, die durch Gleichrichten einer Spannung einer Wechselstromleistungsquelle erzeugt wird, zu erzeugen; mindestens eine oder mehrere Reihenschaltungen, die jeweils mindestens zwei Halbleiterschaltvorrichtungen (3, 4) besitzen und mit denen die Gleichstromquelle verbunden ist; eine Resonanzschaltung (13), die mit der Reihenschaltung verbunden ist und eine primäre Wicklung (8) eines Streufeldtransformators (2) und eines Kondensators (6) enthält, wobei die primäre Wicklung (8) und der Kondensator (6) in Reihe geschaltet sind; und eine Gleichrichterschaltung (11), die mit einer sekundären Wicklung (9) des Streufeldtransformators (2) verbunden ist und konfiguriert ist, eine Hochspannung an ein Magnetron (12) zu liefern, und
wobei die Leistungssteuervorrichtung eine Steuerschaltung (100) umfasst, die ihrerseits umfasst:
einen Eingangsstromdetektionsabschnitt (50), der konfiguriert ist, einen Eingangsstrom der Wechselstromversorgung zu detektieren und Eingangsstrominformationen auszugeben;
einen Eingangsspannungsdetektionsabschnitt (51), der konfiguriert ist, eine Eingangsspannung der Wechselstromquelle zu detektieren und Leistungsversorgungsspannungswellenforminformationen auszugeben;
einen Resonanzspannungsvergleichsabschnitt (52), der konfiguriert ist, Resonanzspannungssteuerinformationen aufgrund von Resonanzschaltungsspannungsinformationen, die von dem Streufeldtransformator (2) genommen wurden, auszugeben; und
einen Eingangsstromvergleichsabschnitt (53), der konfiguriert ist, Leistungssteuerinformationen aufgrund der Eingangsstrominformationen auszugeben;
**dadurch gekennzeichnet, dass** die Steuerschaltung (100) ferner umfasst:
einen Magnetronoszillationsdetektionsabschnitt (54), der konfiguriert ist, wenn eine vorgegebene Zeit abgelaufen ist, nachdem die Eingangsstrominformationen mit einem Schwellenwert der Magnetronoszillationsvergleichsinformationen verglichen wurden, und die Eingangsstrominformationen den Schwellenwert der Magnetronoszillationsvergleichsinformationen übersteigen, zu bestimmen, dass das Magnetron (12) stabil oszilliert, und die Magnetronoszillationsdetektionsinformationen als wahr einzustellen;
eine Mischschaltung (34), die konfiguriert ist, Schaltfrequenzsteuerinformationen aus den Leistungsversorgungsspannungswellenforminformationen aufgrund der Resonanzspannungssteuerinformationen der Leistungssteuerinformationen, die abhängig von den Magnetronoszillationsdetektionsinformationen ausgewählt wurden, zu erzeugen;
eine Minimalfrequenzbegrenzungsschaltung (35), die konfiguriert ist, abhängig von den Magnetronoszillationsdetektionsinformationen, eine vorgegebene minimale Frequenz auszuwählen, um eine minimale Frequenz der Schaltfrequenzsteuerinformationen, die von der Mischschaltung ausgegeben wurden, zu begrenzen; und
einen Schaltimpulserzeugungsabschnitt (41), der konfiguriert ist, Ansteuerungssignale zum Ansteuern einer jeden der Halbleiterschaltvorrichtungen (3, 4) aufgrund der Schaltfrequenzsteuerinformationen von der Minimalfrequenzbegrenzungsschaltung (35) zu erzeugen und jedes der Ansteuerungssignale an jede der-Halbleiterschaltvorrichtungen (3, 4) auszugeben.

2. System zum dielektrischen Hochfrequenzerwärmen nach Anspruch 1, wobei die Minimalfrequenzbegrenzungsschaltung (35) konfiguriert ist, während einer instabilen Oszillationsperiode, bis der Magnetronoszillationsdetektionsabschnitt die Magnetronoszillationsdetektionsinformationen als wahr einstellt, die minimale Frequenz der Schaltfrequenz durch Abschneiden eines minimalen Potenzials der Schaltfrequenzsteuerinformationen, die von der Mischschaltung ausgegeben wurden, auf ein Potenzial, das kleiner als ein Potenzial ist, wenn das Magnetron (12) stabil oszilliert, zu begrenzen.

3. System zum dielektrischen Hochfrequenzerwärmen nach Anspruch 1 oder 2, wobei die Minimalfrequenzbegrenzungsschaltung (35) konfiguriert ist, während einer stabilen Oszillationsperiode, wenn die Magnetrondetektionsinformationen durch den Magnetronoszillationsdetektionsabschnitt (54) als wahr eingestellt wurden, ein minimales Potenzial der Schaltfrequenzsteuerinformationen, die von der Mischschaltung (34) ausgegeben wurden, auf ein Potenzial abzuschneiden, das größer als das Potenzial für eine instabile Oszillationsperiode ist, wenn das Magnetron (12) instabil oszilliert, um die minimale Frequenz der Schaltfrequenz als während der instabilen Oszillationsperiode zu senken.

4. System zum dielektrischen Hochfrequenzerwärmen nach einem der Ansprüche 1 bis 3, wobei die Mischschaltung (34) konfiguriert ist, zu bewirken, während einer instabilen Oszillationsperiode bis die Magnetronoszillationsdetektionsinformationen wahr werden, dass die Resonanzspannungssteuerinformationen aufgrund der Magnetronoszillationsdetektionsinformationen auf die Schaltfrequenzsteuerinformationen reagieren, um eine Spannungssteuerung auszuführen, wobei eine an das Magnetron (12) angelegte Spannung während der instabilen Oszillationsperiode des Magnetron (12) gesteuert wird.

5. System zum dielektrischen Hochfrequenzerwärmen nach einem der Ansprüche 1 bis 4, wobei der Magnetronoszillationsdetektionsabschnitt (54) konfiguriert ist, aufgrund eines Ereignisses-, dass die die Eingangsstrominformationen mit dem Schwellenwert der Magnetronoszillationsvergleichsinformationen verglichen werden, und ein Potenzial, das die Eingangsstrominformationen repräsentiert, ein Potenzial, das den vorgegebenen Schwellenwert repräsentiert, übersteigt, zu detektieren, dass das Magnetron (12) begonnen hat, zu oszillieren, und konfiguriert ist, nachdem eine vorgegebene Zeitdauer seit dem Start der Oszillation abgelaufen ist, zu bestimmen, dass das Magnetron (12) stabil oszilliert, und die Magnetronoszillationsdetektionsinformationen als wahr einstellt.

6. System zum dielektrischen Hochfrequenzerwärmen nach einem der Ansprüche 1 bis 5, wobei die Mischschaltung (34) konfiguriert ist, dann, wenn die Magnetronoszillationsdetektionsinformationen als wahr eingestellt sind, zu bewirken, dass die Leistungssteuerinformationen auf die Schaltfrequenzsteuerinformationen reagieren, um eine Leistungssteuerung auszuführen, wobei ein Eingangsstrom während einer stabilen Oszillationsperiode des Magnetron (12) in die Wechselrichterleistungsversorgungsschaltung gesteuert wird.

7. System zum dielektrischen Hochfrequenzerwärmen nach einem der Ansprüche 1 bis 6, wobei die Mischschaltung (34) konfiguriert ist, während einer stabilen Oszillationsperiode, wenn die Magnetronoszillationsdetektionsinformationen als wahr ausgegeben werden, durch Gleichrichten eines Eingangsstroms der Wechseistromquelle erhaltene Eingangsstromwellenforminformationen zu verwenden, statt die Leistungsversorgungsspannungswellenforminformationen zu verwenden.

8. System zum dielektrischen Hochfrequenzerwärmen nach einem der Ansprüche 1 bis 7, wobei
die Steuerschaltung (100) konfiguriert ist, die Umsetzerleistungsversorgungsschaltung zu steuern, wobei eine Schaltfrequenz eines Ein/Aus-Ansteuerungssignals für die Halbleiterschaltvorrichtungen (3, 4) moduliert wird und in eine elektrische Hochfrequenzleistung umgesetzt wird, und eine auf einer sekundären Seite des Streufeldtransformators (2) erzeugte Ausgabe an das Magnetron (12) angelegt wird, um das Magnetron (12) anzusteuern, damit es oszilliert, und
die Steuerschaltung (100) umfasst:
eine Spannungs-/Leistungs-Steuerfunktion, die durch Schalten zwischen einer Spannungssteuerung, wobei eine an das Magnetron (12) angelegte Spannung gesteuert wird, und einer Leistungssteuerung, wobei ein Eingangsstrom an die Wechselrichterleistungsversorgungsschaltung gesteuert wird, steuert; und
eine Minimalfrequenzbegrenzungsfunktion, die die Wechselrichterleistungsversorgungsschaltung durch Schalten einer Minimalfrequenz der Schaltfrequenz zwischen einer ersten Frequenz und einer zweiten Frequenz, die größer als die erste Frequenz ist, begrenzt,
wobei dann, wenn die Wechselrichterleistungsversorgungsschaltung beginnt zu arbeiten, die Steuerschaltung die Spannungssteuerung ausführt und die Minimalfrequenz der Schaltfrequenz auf die zweite Frequenz einstellt, und
wobei, nachdem der Magnetronoszillationsdetektionsabschnitt die Magnetronoszillationsdetektionsinformationen als wahr einstellt, die Steuerschaltung (100) die Leistungssteuerung ausführt und die Minimalfrequenz der Schaltfrequenz auf die erste Frequenz schaltet.

## Revendications

1. Système de chauffage diélectrique haute fréquence comportant une alimentation de puissance à onduleur et un appareil de contrôle de puissance pour contrôler le circuit d'alimentation de puissance à onduleur, l'alimentation de puissance à onduleur comprenant : un circuit d'alimentation en courant continu configuré pour générer une source de courant continu produite par redressement d'une tension provenant d'une source de courant alternatif ; au moins un ou plusieurs circuits en série ayant au moins deux dispositifs de commutation à semi-conducteur (3, 4) et auxquelles est envoyée la source de courant continu ; un circuit de résonance (13) connecté au circuit en série et comprenant une bobine primaire (8) d'un transformateur à fuite (2) et un condensateur (6), la bobine primaire (8) et le condensateur (6) étant connectés en série ; et un circuit redresseur (11) connecté à une bobine secondaire (9) du transformateur à fuite (2) et configuré pour fournir une haute tension à un magnétron (12), et
l'appareil de contrôle de puissance comportant un circuit de contrôle (100) comportant :
une section de détection de courant d'entrée (50) configurée pour détecter un courant d'entrée de la source de courant alternatif et pour délivrer en sortie une information de courant d'entrée ;
une section de détection de tension d'entrée (51) configurée pour détecter une tension d'entrée de la source de courant alternatif et pour sortir une information de forme d'onde d'une tension d'alimentation ;
une section de comparaison de tension de résonance (52) configurée pour délivrer en sortie une information de contrôle d'une tension de résonance sur la base d'une information de voltage de circuit de résonance obtenue en provenance du transformateur à fuite (2) ; et
une section de comparaison de courant d'entrée (53) configurée pour délivrer en sortie une information de contrôle de puissance à partir de l'information de courant d'entrée ;
**caractérisé en ce que** le circuit de contrôle (100) comporte en outre :
une section de détection d'oscillation de magnétron (54) configurée pour déterminer, lorsqu'une période de temps prédéterminée s'est écoulée à la suite de la comparaison de l'information de courant d'entrée avec une valeur seuil de l'information de comparaison d'oscillation du magnétron et que l'information de courant d'entrée dépasse la valeur seuil de l'information de comparaison d'oscillation du magnétron, que le magnétron (12) oscille de manière stable et définir l'information de détection d'oscillation du magnétron comme étant vraie ;
un circuit mélangeur (34) configuré pour générer une information de contrôle de fréquence de commutation à partir de l'information de forme d'onde de la tension d'alimentation, sur la base de l'information de contrôle de la tension de résonance ou de l'information de contrôle de puissance, le choix de l'information s'effectuant en fonction de l'information de détection de l'oscillation du magnétron ;
un circuit de limitation de fréquence minimale (35) configuré pour sélectionner une fréquence minimale prédéterminée en fonction de l'information de détection de l'oscillation du magnétron de manière à limiter une fréquence minimale de l'information de contrôle de la fréquence de commutation délivrée en sortie par le circuit mélangeur ; et
une section de génération d'une impulsion de commutation (41) configurée pour générer des signaux de commande pour respectivement actionner chacun des dispositifs de commutation à semi-conducteur (3, 4) sur la base de l'information de contrôle de fréquence de commutation provenant du circuit de limitation de fréquence minimale (35) et délivrer en sortie chacun des signaux de commande à chacun des dispositifs de commutation à semi-conducteur (3, 4).

2. Système de chauffage diélectrique haute fréquence selon la revendication 1, où, durant une période d'oscillation instable s'étendant jusqu'au moment où la section de détection d'oscillation du magnétron définit l'information de détection d'oscillation du magnétron comme étant vraie, le circuit de limitation de fréquence minimale (35) est configuré pour limiter la fréquence minimale de la fréquence de commutation en réduisant un potentiel minimum de l'information de contrôle de fréquence de commutation délivrée en sortie par le circuit mélangeur à un potentiel qui est inférieur à un potentiel correspondant à une oscillation stable du magnétron (12).

3. Système de chauffage diélectrique haute fréquence selon la revendication 1 ou 2, où, durant une période d'oscillation stable lors de laquelle l'information de détection d'oscillation du magnétron est définie comme étant vraie par la section de détection d'oscillation du magnétron (54), le circuit de limitation de fréquence minimale (35) est configuré pour réduire un potentiel minimal de l'information de contrôle de fréquence de commutation délivrée en sortie par le circuit mélangeur (34) à un potentiel qui est supérieur au potentiel d'une période d'oscillation instable lors de laquelle le magnétron (12) oscille de manière instable, afin que la fréquence minimale de la fréquence de commutation soit réduite par rapport à la période d'oscillation instable.

4. Système de chauffage diélectrique haute fréquence selon l'une quelconque des revendications 1 à 3, où, lors d'une période d'oscillation instable s'étendant jusqu'au moment où l'information de détection d'oscillation du magnétron devient vraie, le circuit mélangeur (34) est configuré pour faire agir l'information de contrôle de tension de résonance sur l'information de contrôle de la fréquence de commutation, sur la base de l'information de détection de l'oscillation du magnétron, de manière à contrôler la tension appliquée au magnétron (12) au cours de la période d'oscillation instable du magnétron (12).

5. Système de chauffage diélectrique haute fréquence selon l'une quelconque des revendications 1 à 4, où, lorsqu'une comparaison de l'information de courant d'entrée avec la valeur seuil de l'information de comparaison de l'oscillation du magnétron est effectuée et un potentiel représentant l'information de courant d'entrée dépasse un potentiel représentant la valeur seuil prédéterminée, la section de détection de l'oscillation du magnétron (54) est configurée pour détecter que le magnétron (12) a commencé à osciller et est configurée pour déterminer, après écoulement d'une période prédéterminée depuis le début de l'oscillation, que le magnétron (12) oscille de manière stable et définir l'information de détection de l'oscillation du magnétron comme étant vraie.

6. Système de chauffage diélectrique haute fréquence selon l'une quelconque des revendications 1 à 5, où lorsque l'information de détection de l'oscillation du magnétron est définie comme étant vraie, le circuit mélangeur (34) est configuré pour faire agir l'information de contrôle de puissance sur l'information de contrôle de la fréquence de commutation de manière à contrôler la puissance d'un courant d'entrée fournie au circuit d'alimentation à onduleur durant une période d'oscillation stable du magnétron (12).

7. Système de chauffage diélectrique haute fréquence selon l'une quelconque des revendications 1 à 6, où, durant une période d'oscillation stable lors de laquelle l'information de détection de l'oscillation du magnétron est définie comme étant vraie, le circuit mélangeur (34) est configuré pour utiliser l'information de forme d'onde de courant d'entrée obtenue par le redressement d'un courant d'entrée de la source de courant alternatif au lieu d'utiliser l'information de forme d'onde de tension d'alimentation.

8. Système de chauffage diélectrique haute fréquence selon l'une quelconque des revendications 1 à 7, où
le circuit de contrôle (100) est configuré pour contrôler le circuit d'alimentation à onduleur, où une fréquence de commutation d'un signal de commande on/off pour les dispositifs de commutation à semi-conducteur (3, 4) est modulée et convertie en puissance électrique haute fréquence et un courant de sortie généré sur un côté secondaire du transformateur à fuite (2) est appliqué au magnétron (12) de manière à faire osciller le magnétron (12), et
le circuit de contrôle (100) comporte :
une fonction de contrôle de tension/puissance qui fonctionne par commutation entre un contrôle de tension lors duquel est contrôlée une tension appliquée au magnétron (12) et un contrôle de puissance lors duquel est contrôlé un courant d'entrée du circuit d'alimentation à onduleur ; et
une fonction de limitation de fréquence minimale qui limite le circuit d'alimentation à onduleur en commutant une fréquence minimale de la fréquence de commutation entre une première fréquence et une deuxième fréquence supérieure à la première fréquence,
où, lors du démarrage du circuit d'alimentation à onduleur, le circuit de contrôle exécute le contrôle de tension et règle la fréquence minimale de la fréquence de commutation sur la deuxième fréquence ; et
où, après que la section de détection d'oscillation du magnétron a définit l'information de détection d'oscillation du magnétron comme étant vraie, le circuit de contrôle (100) exécute le contrôle de puissance et règle la fréquence minimale de fréquence de commutation sur la première fréquence.
